# EUROPEAN PATENT SPECIFICATION

(11) **EP 1 750 070 B1**
(45) Date of publication and mention of the grant of the patent: **30.05.2012**
(21) Application number: 05107263.5
(22) Date of filing: 05.08.2005
(51) Int. Cl.: F24H 1/43, F28F 1/16, F28D 7/02

(54) **Gas boiler provided with a heat exchanger with finned tube and method of producing the same**
Gasheizkessel mit Rippenrohrwärmetauscher und Herstellungsverfahren dafür
Chaudière à gaz avec échangeur de chaleur avec tube à ailettes et procedé de production dudite chaudière à gaz

(43) Date of publication of application: 07.02.2007
(73) Proprietor: ELBI International S.p.A., 10129 Torino (IT)
(72) Inventor: Cannas, Christian, 23826, Mandello del Lario (Lecco) (IT)
(74) Representative: Quinterno, Giuseppe

(56) References cited:
- WO-A-2004/090434
- CH-A- 262 895
- DE-A1- 2 248 845
- DE-A1- 19 755 095
- DE-U1- 29 823 617
- FR-A- 1 129 717
- GB-A- 872 255
- GB-A- 1 114 252

## Description

The present invention relates to a gas boiler provided with a heat exchanger with finned tube.

More specifically, the present invention relates to a gas boiler provided with a heat exchanger for producing hot water.

A gas boiler for producing hot water normally comprises a gas burner, and at least one heat exchanger through which combustion fumes and water flow. Some types of gas boilers, known as condensation boilers, condense the steam in the combustion fumes and transfer the latent heat in the fumes to the water. Condensation boilers are further divided into a first type, equipped with a first exchanger close to the burner, and a second exchanger for simply condensing the fumes; and a second type, equipped with only one heat exchanger which provides solely for thermal exchange along a first portion, and for both thermal exchange and fume condensation along a second portion.

A condensation or dual-function exchanger of the above type is disclosed in WO 2004/090434 and comprises a casing extending along a first axis and through which combustion fumes flow; a tube along which water flows, and which is housed inside said casing and coils about the first axis to form a helix comprising a succession of turns; and deflecting means for directing the fumes between successive turns in a first direction perpendicular to said first axis. The tube is finned with at least a first and second outward fins facing one another and extending along the length of the tube.

Even though the above identified gas boiler proved to be extremely effective in term of heat exchange, has still the drawback that the distance between the first and second outward fins of adjacent turns cannot be freely selected to optimise the heat exchange because the convexity of the tube protruding from the outward fins imposes a limit to such a distance to let the fumes flow with an adequate speed.

It is an object of the present invention to provide a gas boiler provided with a heat exchanger for condensing the vapour contained in the combustion fumes and producing hot water, which further improves the heat exchange without imposing structural limitation to the design parameters.

According to the present invention, there is provided a gas boiler provided with a heat exchanger in which said first and second fins are tangent to said tube.

In this way, the distance between the fins of adjacent turns can be selected to optimise the heat exchange.

The present invention also relates to a method of producing a heat exchanger for a gas boiler.

According to the present invention, there is provided a method of producing a heat exchanger for a gas boiler, as claimed in Claim 11.

A number of embodiments of the present invention will be described by way of example with reference to the accompanying drawings, in which:
Figure 1 shows a schematic front view, with parts in section and parts removed for clarity, of a gas boiler in accordance with the present invention;
Figure 2 shows a larger-scale section of a detail of the Figure 1;
Figure 3 shows a view in perspective of a tube used to produce the Figure 1 heat exchanger;
Figures from 4 to 8 show variations of the tube of Figure 3.

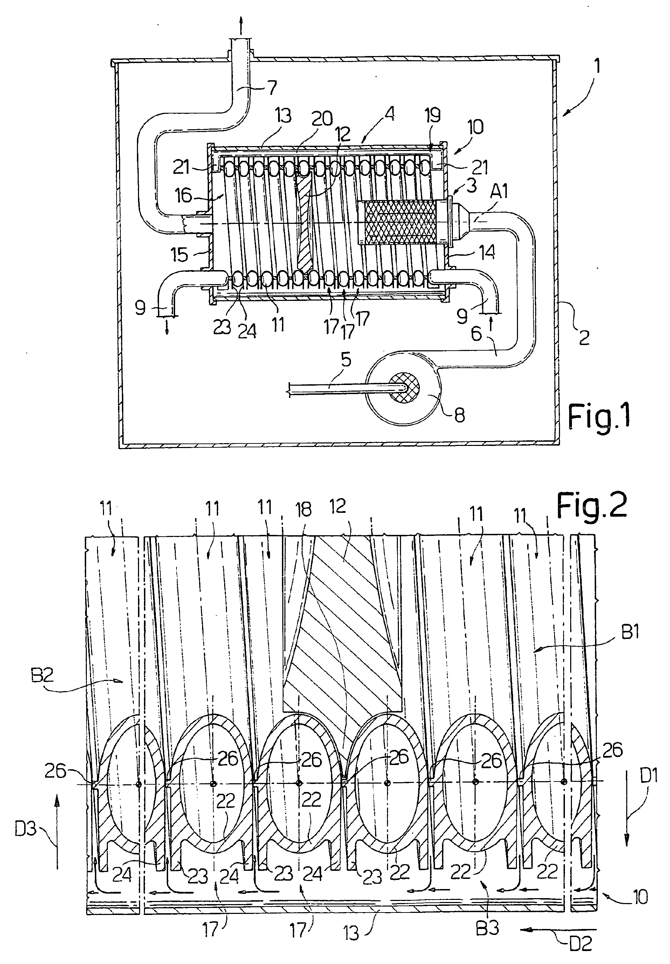

Number 1 in Figure 1 indicates as a whole a gas boiler. Boiler 1 is a wall-mounted condensation boiler, in which the vapour in the combustion fumes is condensed, and comprises an outer structure 2 in which are housed a burner 3; a heat exchanger 4; a gas supply conduit 5; a pipe 6 for supplying an air-gas mixture to burner 3; a combustion gas exhaust pipe 7; a fan 8 connected to supply pipe 6, and which performs the dual function of supplying the air-gas mixture to burner 3, and expelling the combustion fumes; and a water circuit 9. Burner 3 is connected to pipe 6, is cylindrical in shape, and comprises a lateral wall with holes (not shown) for emitting the air-gas mixture and feeding the flame. Burner 3 is partially housed inside exchanger 4 which, in fact, also acts as a combustion chamber. Heat exchanger 4 is substantially cylindrical in shape, extends along a substantially horizontal axis A1, and comprises a casing 10, through which the combustion fumes flow; a finned tube 11, along which water flows; and a disk 12 for directing the fumes along a given path inside exchanger 4. Casing 10 comprises a cylindrical lateral wall 13 about axis A1; an annular wall 14 connected to lateral wall 13 and to burner 3; and an annular wall 15 connected to lateral wall 13 and to exhaust pipe 7. Burner 3 extends, coaxially with exchanger 4, inside of exchanger 4 for a given length. Tube 11 coils about axis A1 to form a helix 16 comprising a succession of adjacent turns 17, each located close to lateral wall 13, and has two opposite ends with known fittings (not shown) for connecting tube 11 to water circuit 9 outside exchanger 4. Disk 12 has a lateral helix-shaped edge 18 engaging turns 17. That is, disk 12 is screwed to turns 17 into the desired position along axis A1 and in a position substantially perpendicular to axis A1. An inwardly finned helix will require a disk with a differently shaped edge to match with the shape of the fins.

Exchanger 4 comprises three spacers 19 for keeping turns 17 a given distance from lateral wall 13. Each spacer 19 comprises a straight portion 20 parallel to axis A1, and from which project two fingers 21 for clamping the helix 16 on opposite sides. Helix 16, disk 12, and spacers 19 define, inside casing 10, a region B1 housing burner 3; a region B2 communicating directly with exhaust pipe 7; and three regions B3, each extending between two spacers 19, turns 17, and lateral wall 13. Combustion of the air-gas mixture takes place in region B1; and the resulting fumes, being prevented by disk 12 from flowing directly to region B2, flow between turns 17, in a direction D1 substantially perpendicular to axis A1, to regions B3, along which they flow in a direction D2 substantially parallel to axis A1. On reaching regions B3, the fumes flow between turns 17 in direction D3 to region B2 and then along exhaust pipe 7.

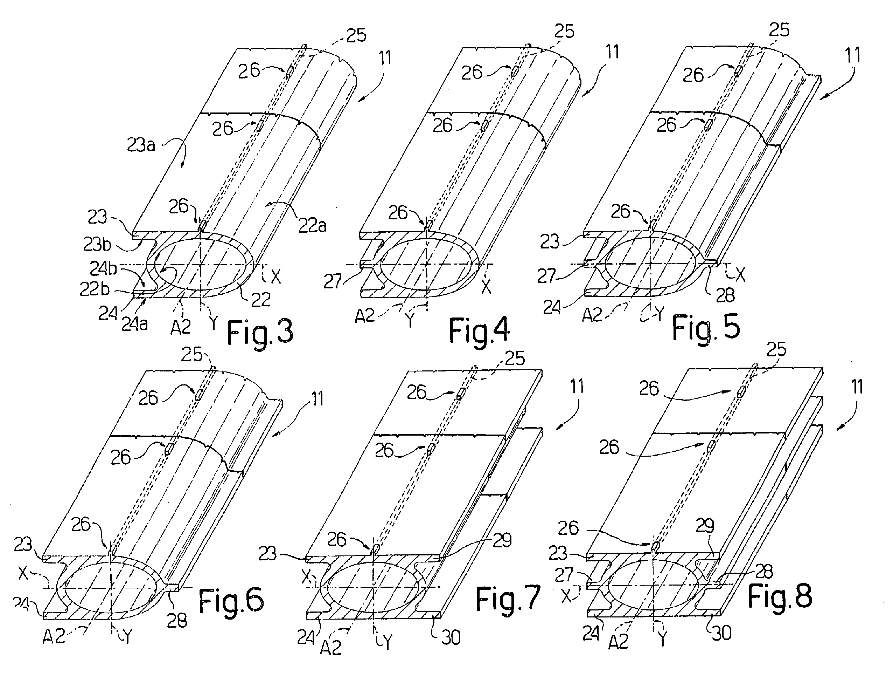

Tube 11 is preferably made of aluminium or aluminium-based alloy. With reference to Figure 3, finned tube 11 is an extruded tube, which extends along an axis A2, and comprises an oval-section wall 22; two fins 23 and 24 on one side of tube 11. The cross section of tube 11 has a major axis X and a minor axis Y. Wall 22 is provided with an outer surface 22a and an inner surface 22b and has a constant thickness. Fins 23 and 24 are parallel to axis A2 of tube 14 and to major axis X, and are therefore parallel to one another and face one another. The maximum extension of fins 23 and 24, in a direction parallel to major axis X, is roughly a quarter of the length of major axis X. Fins 23 and 24 are tangent to the tube 11 and have a thickness equal to the thickness of wall 22 and are provided with respective outer surface 23a and 24a, which are tangent to outer surface 22a, and inner surface 23b and 24b, which are ideally tangent to the inner surface 22b.

Tube 11 is extruded with a longitudinal rib 25 (shown in dotted lines in figure 3) protruding from outer surface 22a at the intersection of wall 22 with minor axis Y. Rib 25 has a rectangular cross section and is partially machined to form a number of teeth 26 equally spaced along tube 11 for spacing adjacent turns 17.

Once extruded with fins 23, 24 and machined the rib 25, tube 11 is coiled about axis A1 to form helix 16. This operation actually comprises calendering tube 11, with the minor axis Y of the section of tube 14 maintained substantially parallel to axis A1. The relatively small size of fins 23 and 24 does not hinder the calendering operation, and does not call for notching fins 23 and 24. The three spacers 19 are clamped on the helix 16 and arranged 120 degrees apart, so as to form, with the coiled tube 11, an assembly which is inserted inside lateral wall 13 of casing 10. Annular walls 14 and 15 are then fitted to the opposite ends of cylindrical wall 13.

Tube 11 is coiled with a constant pitch and radius, so that fins 23 and 24 of each turn 17 face and are parallel to fins 23 and 24 of the adjacent turns 17, as shown in Figure 2. A gap is thus formed between each two adjacent turns 17, is of constant width at fins 23 and 24. The fumes flow from region B1 to regions B3 in direction D1 towards wall 13, then flow in direction D2 between turns 17 and wall 13, flow between turns 17 in direction D3 from regions B3 to region B2, and are finally expelled by exhaust pipe 7. The successive gaps between turns 17 therefore define compulsory fume paths.

The height of rib 25 may be selected to be equal to the most appropriate distance between adjacent turns 17 and their fins 23 and 24.

In Figure 4 variation, tube 11 is provided with an additional fin 27 parallel to fins 23 and 24 to axes A1 and X and located between fins 23 and 24.

According to figure 5 variation, tube 11 is provided with additional fin 27 and additional fin 28 located opposite and coplanar to fin 27.

In figure 6 variation, tube 11 is provided with additional fin 28 only, whereas additional fin 27 is missing.

Figure 7 variation shows a tube 11 provided with an additional fin 29, which is coplanar and opposite to fin 23, and additional fin 30, which is coplanar and opposite and coplanar to fin 24.

In figure 8 variation, tube 11 is provided with additional fin 29 and 30 tangent to the outer wall 22 of tube 11 and fins 27 and 28.

Exchanger 4 as described above may also be used in condensation boilers comprising a main exchanger, and in which exchanger 4 provides solely for condensing the fumes, as opposed to acting as a combustion chamber as in the example described.

## Claims

1. A gas boiler provided with a heat exchanger for condensing the vapour contained in the combustion fumes and producing hot water; the heat exchanger (4) comprising a casing (10) extending along a first axis (A1) and through which combustion fumes flow; a tube (11) along which water flows, and which is housed inside said casing (10) and coils about the first axis (A1) to form a helix (16) comprising a succession of turns (17); and deflecting means (12) for directing the fumes between successive turns (17); said tube (11) comprising at least a first and a second fins (23, 24) extending along the length of said tube (11) parallel to one another and facing one another; said gas boiler being **characterized in that** said first and second fins (23, 24) are tangent to said tube (11).

2. A gas boiler as claimed in Claim 1, **characterized in that** the first and second fins (23, 24) are continuous with no interruptions.

3. A gas boiler as claimed in Claim 1 or 2, **characterized in that** the first and second fins (23, 24) are directed outwardly with respect to said first axis (A1).

4. A gas boiler as claimed in any one of Claims 1 to 3, **characterized in that** the first and second fins (23, 24) of each turn (17) are parallel to and face the first and second fin (23, 24) respectively of an adjacent turn (19).

5. A gas boiler as claimed in any one of the foregoing Claims, **characterized in that** said tube (11) comprises a third and a fourth fins (29, 30) parallel to each other and facing one another; said third fin (29) being coplanar to said first fin (23) and said fourth fin (30) being coplanar with said second fin (24); said third and fourth fins (29, 30) being directed inwardly with respect to said first axis (A1) .

6. A gas boiler as claimed in claim 5 **characterized in that** said tube (11) comprises a fifth fin (27) parallel to the first and second fins (23, 24) and located in between the first and the second fins (23, 24) and directed outwardly with respect to the first and second fins (23, 24).

7. A gas boiler as claimed in claim 6 **characterised in that** said tube (11) comprises a sixth fin (28) parallel to the first and the second fin (23, 24) and located between the third and fourth fin (29, 30) on the opposite side of the first and second fins (23, 24).

8. A gas boiler as claimed in any one of the foregoing Claims, **characterized in that** said tube (11) is provided with wall (22) having an oval cross section with a major axis (X) parallel to the first and second fin (23, 24), and a minor axis (Y) perpendicular to the first and second fin (23, 24).

9. A gas boiler as claimed in any one of the foregoing Claims, **characterized by** comprising spacers (19) for keeping said helix (16) a given distance apart from the casing (10) of the heat exchanger (4).

10. A gas boiler as claimed in any one of the foregoing Claims, **characterized in that** the tube (11) is provided with integrally made teeth (26) for spacing said turns (17) apart.

11. A method of producing a heat exchanger of the gas boiler (1) claimed in any one of Claims 1 to 4, **characterized by** extruding said tube (11) and the first (23) and second (24) fins to form a straight, finned tube (14) in one extrusion operation such that said fins extend along the length of said tube (11) parallel to one another and facing one another tangent to said tube (11).

12. A method as claimed in Claim 11, **characterized by** extruding said tube (11) in one extrusion operation with said third and fourth fins (29, 30).

13. A method as claimed in Claim 12, **characterized by** extruding said tube (11) with said fifth fin (27) in one extrusion operation.

14. A method as claimed in Claim 13, **characterized by** extruding said tube (11) with said sixth fin (28) on one extrusion operation.

15. A method as claimed in any one of the Claims 11 to 14, **characterized by** extruding said tube (11) with a continuous substantially radial rib (25) and partially machining said rib (25) so as to make teeth (26) for spacing said turns (17) apart once the tube (11) is coiled in a helix (16).

## Patentansprüche

1. Gasheizkessel, der mit einem Wärmetauscher zum Kondensieren des Dampfs, der in den Abgasen enthalten ist, ausgestattet ist und Warmwasser erzeugt; wobei der Wärmetauscher (4) ein Gehäuse (10), das entlang einer ersten Achse (A1) verläuft und von den Abgasen durchströmt wird; ein Rohr (11), das von Wasser durchflossen wird, innerhalb des Gehäuses (10) untergebracht und in Form einer Spirale um die erste Achse (A1) gewunden ist, um eine Spirale (16) zu bilden, die eine Folge von Windungen (17) besitzt; sowie eine Ablenkeinrichtung (12) umfasst, um die Abgase zwischen die aufeinanderfolgenden Windungen (17) zu leiten; wobei das Rohr (11) zumindest eine erste und eine zweite Rippe (23, 24) umfasst, die entlang der Länge des Rohrs (11) parallel zueinander verlaufen und einander gegenüberliegen; wobei der Gasheizkessel **dadurch gekennzeichnet ist, dass** die erste und die zweite Rippe (23, 24) tangential zum Rohr (11) verlaufen.

2. Gasheizkessel gemäß Anspruch 1, **dadurch gekennzeichnet, dass** die erste und die zweite Rippe (23, 24) durchgehend ohne Unterbrechungen verlaufen.

3. Gasheizkessel gemäß Anspruch 1 oder 2, **dadurch gekennzeichnet, dass** die erste und die zweite Rippe (23, 24) im Hinblick auf die erste Achse (A1) nach außen gerichtet sind.

4. Gasheizkessel gemäß irgendeinem der Ansprüche 1 bis 3, **dadurch gekennzeichnet, dass** die erste und die zweite Rippe (23, 24) einer jeden Windung (17) parallel zueinander verlaufen und der ersten bzw. zweiten Rippe (23, 24) einer benachbarten Windung (19) gegenüberliegen.

5. Gasheizkessel gemäß irgendeinem der bisherigen Ansprüche, **dadurch gekennzeichnet, dass** das Rohr (11) eine dritte und eine vierte Rippe (29, 30) umfasst, die parallel zueinander und einander gegenüberliegend angeordnet sind; wobei die dritte Rippe (29) koplanar zur ersten Rippe (23) verläuft und die vierte Rippe (30) koplanar zur zweiten Rippe (24) verläuft; wobei die dritte und die vierte Rippe (29, 30) im Hinblick auf die erste Achse (A1) nach innen gerichtet sind.

6. Gasheizkessel gemäß Anspruch 5, **dadurch gekennzeichnet, dass** das Rohr (11) eine fünfte Rippe (27) umfasst, die parallel zur ersten und zweiten Rippe (23, 24) verläuft, wobei sie zwischen der ersten und der zweiten Rippe (23, 24) vorgesehen und im Hinblick auf die erste und die zweite Rippe (23, 24) nach außen gerichtet ist.

7. Gasheizkessel gemäß Anspruch 6, **dadurch gekennzeichnet, dass** das Rohr (11) eine sechste Rippe (28) umfasst, die parallel zur ersten und zweiten Rippe (23, 24) verläuft, wobei sie zwischen der dritten und der vierten Rippe (29, 30) an jener Seite angeordnet ist, die der ersten und der zweiten Rippe (23, 24) gegenüberliegt.

8. Gasheizkessel gemäß irgendeinem der bisherigen Ansprüche, **dadurch gekennzeichnet, dass** das Rohr (11) mit einer Wand (22) versehen ist, die einen ovalen Querschnitt mit einer Hauptachse (X), die parallel zur ersten und zweiten Rippe (23, 24) verläuft, sowie eine Nebenachse (Y) besitzt, die senkrecht zur ersten und zweiten Rippe (23, 24) verläuft.

9. Gasheizkessel gemäß irgendeinem der bisherigen Ansprüche, **dadurch gekennzeichnet, dass** der Gasheizkessel Abstandhalter (19) umfasst, um die Spirale (16) um einen vorgegebenen Abstand vom Gehäuse (10) des Wärmetauschers (4) entfernt zu halten.

10. Gasheizkessel gemäß irgendeinem der bisherigen Ansprüche, **dadurch gekennzeichnet, dass** das Rohr (11) mit gemeinsam ausgebildeten Zähnen (26) versehen ist, um die Windungen (17) voneinander zu beabstanden.

11. Verfahren zur Herstellung eines Wärmetauschers des Gasheizkessels (1) gemäß irgendeinem der Ansprüche 1 bis 4, **dadurch gekennzeichnet, dass** das Rohr (11) sowie die erste Rippe (23) und die zweite Rippe (24) in einem einzigen Extrudiervorgang extrudiert werden, um ein gerades, mit Rippen versehenes Rohr (14) so auszubilden, dass die Rippen entlang der Länge des Rohrs (11) parallel zueinander und einander gegenüberliegend tangential zum Rohr (11) verlaufen.

12. Verfahren gemäß Anspruch 11, **dadurch gekennzeichnet, dass** das Rohr (11) in einem einzigen Extrudiervorgang mit der dritten Rippe (29) und der vierten Rippe (30) extrudiert wird.

13. Verfahren gemäß Anspruch 12, **dadurch gekennzeichnet, dass** das Rohr (11) mit der fünften Rippe (27) in einem einzigen Extrudiervorgang extrudiert wird.

14. Verfahren gemäß Anspruch 13, **dadurch gekennzeichnet, dass** das Rohr (11) mit der sechsten Rippe (28) in einem einzigen Extrudiervorgang extrudiert wird.

15. Verfahren gemäß irgendeinem der Ansprüche 11 bis 14, **dadurch gekennzeichnet, dass** das Rohr (11) mit einer fortlaufenden, radialen Rippe (25) extrudiert wird, wobei diese Rippe (25) maschinell bearbeitet wird, um Zähne (26) herzustellen, um die Windungen (17) dann voneinander zu beabstanden, wenn das Rohr (11) einmal zu einer Spirale (16) gewickelt ist.

## Revendications

1. Chaudière à gaz pourvue d'un échangeur de chaleur pour condenser la vapeur contenue dans les rejets de combustion et produire de l'eau chaude, l'échangeur de chaleur (4) comprenant un carter (10) s'étendant le long d'un premier axe (A1) et dans lequel circulent les rejets de combustion ; un tube (11) dans lequel circule de l'eau, et qui est logé à l'intérieur dudit carter (10) et qui s'enroule autour du premier axe (A1) pour former un serpentin (16) comprenant une succession de spires (17) ; et un moyen de déviation (12) pour diriger les rejets entre les spires successives (17) ; ledit tube (11) comprenant au moins une première et une deuxième ailette (23, 24) s'étendant le long de la longueur dudit tube (11), parallèles entre elles et face l'une à l'autre ; ladite chaudière à gaz étant **caractérisée en ce que** lesdites première et deuxième ailettes (23, 24) sont tangentes audit tube (11).

2. Chaudière à gaz selon la revendication 1, **caractérisée en ce que** les première et deuxième ailettes (23, 24) sont continues et sans interruption.

3. Chaudière à gaz selon la revendication 1 ou 2, **caractérisée en ce que** les première et deuxième ailettes (23, 24) sont orientées vers l'extérieur par rapport audit premier axe (A1).

4. Chaudière à gaz selon l'une quelconque des revendications 1 à 3, **caractérisée en ce que** les première et deuxième ailettes (23, 24) de chaque spire (17) sont parallèles à et font face respectivement aux première et deuxième ailettes (23, 24) d'une spire adjacente (19).

5. Chaudière à gaz selon l'une quelconque des revendications précédentes, **caractérisée en ce que** ledit tube (11) comprend une troisième et une quatrième ailette (29, 30) parallèles entre elles et face l'une à l'autre ; ladite troisième ailette (29) étant coplanaire avec ladite première ailette (23) et ladite quatrième ailette (30) étant coplanaire avec ladite deuxième ailette (24) ; lesdites troisième et quatrième ailettes (29, 30) étant orientées vers l'intérieur par rapport audit premier axe (A1).

6. Chaudière à gaz selon la revendication 5, **caractérisée en ce que** ledit tube (11) comprend une cinquième ailette (27) parallèle aux première et deuxième ailettes (23, 24) et située entre les première et deuxième ailettes (23, 24) et orientée vers l'extérieur par rapport aux première et deuxième ailettes (23, 24).

7. Chaudière à gaz selon la revendication 6, **caractérisée en ce que** ledit tube (11) comprend une sixième ailette (28) parallèle aux première et deuxième ailettes (23, 24) et située entre les troisième et quatrième ailettes (29, 30) sur le côté opposé des première et deuxième ailettes (23, 24).

8. Chaudière à gaz selon l'une quelconque des revendications précédentes, **caractérisée en ce que** ledit tube (11) est pourvu d'une paroi (22) de section ovale avec un axe principal (X) parallèle aux première et deuxième ailettes (23, 24) et un axe secondaire (Y) perpendiculaire aux première et deuxième ailettes (23, 24).

9. Chaudière à gaz selon l'une quelconque des revendications précédentes, **caractérisée en ce qu'**elle comprend des entretoises (19) pour maintenir ledit serpentin (16) à une distance donnée du carter (10) de l'échangeur de chaleur (4).

10. Chaudière à gaz selon l'une quelconque des revendications précédentes, **caractérisée en ce que** le tube (11) est pourvu de dents intégrées (26) pour espacer lesdites spires (17) les unes des autres.

11. Procédé de production d'un échangeur de chaleur de la chaudière à gaz (1) de l'une quelconque des revendications 1 à 4, **caractérisé par** le fait d'extruder ledit tube (11) et les première (23) et deuxième (24) ailettes pour former un tube droit à ailettes (14) en une opération d'extrusion, de sorte que lesdites ailettes s'étendent le long de la longueur dudit tube (11) parallèlement entre elles et se faisant face de façon tangente audit tube (11).

12. Procédé selon la revendication 11, **caractérisé par** le fait d'extruder ledit tube (11) en une opération d'extrusion avec lesdites troisième et quatrième ailettes (29, 30).

13. Procédé selon la revendication 12, **caractérisé par** le fait d'extruder ledit tube (11) avec ladite cinquième ailette (27) en une opération d'extrusion.

14. Procédé selon la revendication 13, **caractérisé par** le fait d'extruder ledit tube (11) avec ladite sixième ailette (28) en une opération d'extrusion.

15. Procédé selon l'une quelconque des revendications 11 à 14, **caractérisé par** le fait d'extruder ledit tube (11) avec une nervure radiale substantiellement continue (25) et d'usiner partiellement ladite nervure (25) afin de former des dents (26) pour espacer lesdites spires (17) les unes des autres une fois que le tube (11) est enroulé en serpentin (16).
